## Europäisches Patentamt

## European Patent Office

## Office européen des brevets

(19)

(11) Veröffentlichungsnummer: **0 158 307**
**B1**

(12) **EUROPÄISCHE PATENTSCHRIFT**

(45) Veröffentlichungstag der Patentschrift:
22.07.87

(51) Int. Cl.⁴: **F 01 D 11/08**

(21) Anmeldenummer: **85104205.1**

(22) Anmeldetag: **06.04.85**

(54) Gehäuse einer Strömungsmaschine.

(30) Priorität: **10.04.84 DE 3413534**

(43) Veröffentlichungstag der Anmeldung:
**16.10.85 Patentblatt 85/42**

(45) Bekanntmachung des Hinweises auf die Patenterteilung:
**22.07.87 Patentblatt 87/30**

(84) Benannte Vertragsstaaten:
**DE FR GB IT SE**

(56) Entgegenhaltungen:
**DE-A-2 163 068**
**DE-A-2 211 138**
**DE-A-2 401 951**
**DE-A-2 405 490**
**DE-C-3 018 620**
**FR-A-2 436 882**
**FR-A-2 467 291**
**FR-A-2 513 723**
**GB-A-2 081 817**
**US-A-3 068 016**

(73) Patentinhaber: **MTU MOTOREN- UND TURBINEN-UNION MÜNCHEN GMBH, Dachauer Strasse 665 Postfach 50 06 40, D-8000 München 50 (DE)**

(72) Erfinder: **Söhngen, Joachim, Trivastrasse 5 b, D-8000 München (DE)**

## Beschreibung

Die Erfindung bezieht sich auf das Gehäuse einer Strömungsmaschine mit Mitteln zur Minimierung bzw. Konstanthaltung des Spaltes zum Rotor. Solche Mittel sind bei Strömungsmaschinen notwendig da sich infolge von instationären Betriebszuständen der oder die Spalte zwischen Laufschaufeln, insbesondere deren Blattspitzen und dem Gehäuse verändern.

Beim Beschleunigen nimmt das Gehäuse oder ein Gehäusemantel relativ schnell die Temperatur des Gases an aufgrund seiner geringen Masse und seiner großen Oberfläche. Der Rotor weist dagegen eine große Masse und kleine Oberfläche im Vergleich zu seinem Volumen auf und reagiert thermisch langsam. Dies ergibt eine Vergrößerung des Spaltes beider Bauteile und damit einen Leistungsverlust bzw. eine Verringerung des Wirkungsgrades und hat eine Reduzierung des Pumpgrenzabstandes beim Verdichter zur Folge.

Bei der Verzögerung der Maschine verhalten sich Gehäuse und Rotor genau umgekeht wie bei der Beschleunigung. Dies hat zur Folge, daß sich der Spalt verkleinert und die Laufschaufeln einlaufen, abreiben oder sonstwie Schaden nehmen können.

Man hat auf verschiedene Weise versucht die mit den Spaltverlusten einhergehenden Verluste zu verringern und proportional dazu den Gesamtwirkungsgrad der Turbomaschine zu verbesern. Bekannte Maßnahmen waren u.a. die Masse des Gehäuses zu vergrößern, das Gehäuse zu isolieren (doppelwandige Bauweise) und ferner das Gehäuse zu kühlen z. B. durch Anblasen mit Luft (Activ Clearance Control = aktive Steuerung des Spaltes).

Aus der DE-A- 30 38 371 ist ein Metallkeramischer Turbinenmantel bekannt mit Matrixverbindungsmitteln, wie Drahtgitter, die ein geordnetes Muster von sehr feinen Rissen erzeugen. Im Metallsubstrat werden dazwischen liegende Vertiefungen ausgefüllt mit mehreren Zwischenschichten und der keramischen Abdeckschicht.

Die feinen Risse in dem Muster können zwar thermische Beanspruchungen vermindern, bewirken jedoch, daß bei hohen Temperaturen die Korrosions- und Erosionsbeständigkeit nicht mehr ausreicht.

Zur weiteren Verbeserung des Gesamtwirkungsgrades von Strömungsmaschinen wie Turbinen sind Bestrebungen im Gange, die Turbineneintrittstemperatur wesentlich zu eerhöhen, dies hat zur Folge, daß die dem Heißgasstrom ausgesetzte Wandfläche z. B. des Gehäuses eine erhöhte Erosions- und Korrosionsfestigkeit aufweisen muß. Die hierfür bekannten keramischen Werkstoffe weisen jedoch eine Solche Sprödigkeit auf die der Forderung nach guten Einlaufeigenschaften entgegenläuft.

Aufgabe der Erfindung ist es oben genannte Schwierigkeiten zu lösen, d.h., vor allem zu erreichen, daß bei Strömungsmaschinen mit heißen Gasen, insbesondere Gasturbinentriebwerken, die Spalte an den Schaufelspitzen zum Gehäuse über einen möglichst großen Betriebsbereich, einschließlich der instationären Betriebszustände, klein und wirklich konstant gehalten werden können und gleichzeitig für einen Einlaufbelag am Gehäuse die Forderung nach guten Einlaufeigenschaften und hohen Standzeiten (Zyklen) erfüllen zu können.

Die Lösung der gestellten Aufgabe ist in Anspruch 1 enthalten. Weitere Merkmale der Erfindung sind den Unteransprüchen sowie der Beschreibung und der Zeichnung eines Ausführungsbeispiels zu entnehmen.

Die wesentlichsten Vorteile der Erfindung sind:

Anstelle des komplizierten Aufbaus eines mit mehreren Schichten belegten Gehäuses, wobei eine dieser Schichten eine Wärmeisolationsoder Wärmesperrschicht war, oder Packungen von Isoliermaterial oder Keramikformteile verwendet wurden, kommt die Erfindung mit einer einzigen Schicht einer besonderen Keramik in ausgewählter Struktur aus. Diese Schicht ist nicht nur einfacher herstellbar, sondern verbindet die Vorteile der Hochtemperaturfestigkeit, der Erosionsfestigkeit, der Korrosionsfestigkeit mit geringer Wärmeleitfähigkeit und hoher Flammenreflexion.

Durch die infolge des verwendeten direkt darunterliegenden Trägers erfindungsgemäß erzeugte Oberflächenstruktur mit schmalen Stegen ergibt sich eine überraschend gute Einlaufeigenschaft der Schicht.

Anhand der beigefügten Zeichnung sei die Erfindung nachstehend beispielsweise erläutert.

Es zeigen:

Fig. 1 eine Draufsicht auf eine Schicht gemäß Fig. 2

Fig. 2 einen Axialschnitt durch ein Gehäuse mit darauf befestigtem Träger und aufgebrachter keramischer Schicht.

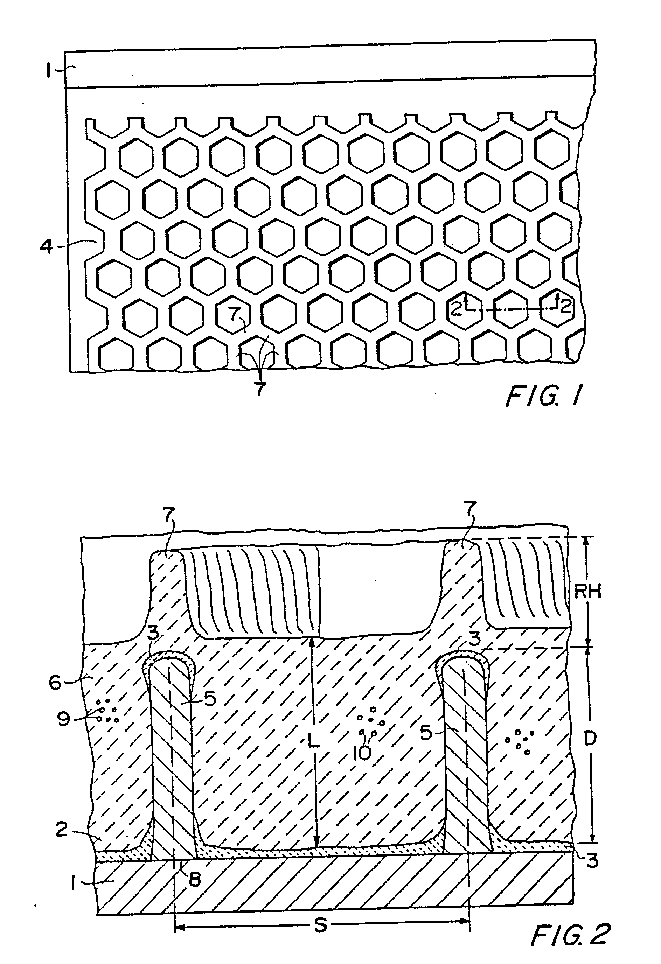

Wie Fig. 2 zeigt, weist das Gehäuse der Strömungsmaschine, insbesondere Gasturbine, eine Wand 1 auf, auf der ein Träger 4, z. B. ein Honigwabenträger oder ein anderes gerüst- oder gitterähnliches Teil mit vorstehenden Rippen 5 o. ä. befestigt, z. B. bei 3 aufgelötet oder aufgeschweißt ist. Das Gehäuse 1 besteht vorzugsweise aus "Inconel", d. h. einer Nickel-Basis-Legierung. Der Träger 4 besteht ebenfalls bevorzugt aus einer Nickel-Basis-Legierung, z. B. "Hastelloy".

Ist der Trägerkörper 4 auf der Wand 1 des Gehäuses befestigt, so wird die keramische Schicht 6 aus, insbesondere mit Yttriumoxid, Magnesiumoxid oder Kalziumoxid stabilisiertem Zirkonoxid 2 durch Plasmaspritzen oder Flammspritzen eines Pulvers aufgebracht. Bewährt hat sich besonders ein keramisches Pulvergemisch aus 93 % Zirkonoxid und 7 % Yttriumoxid. Das Gemisch kann bezüglich der Bestandteile und Zusammensetzung (Vol.%)

sowie Teilchenform 9 10 in gewünschter Weise abgeändert werden. Auch fluide oder fluidisierte Zusammensetzungen sind anwendbar.

Besonders bewährt hat sich die Wahl folgender Spritzparameter:

Primärgas: Ar oder $N_2$
Sekundärgas: $H_2$
Leistung: ca. 15-50 kw
Plasmapistole: Fa. Plasmatechnik bzw. Fa. Metco
Düsendurchmesser: ca. 4-6 mm
Trägergas: Ar
Pulververbrauch: 20-60 g/min
Spritzabstand: 50-80 mm
Spritzpulver: $ZrO_2$ $Y_2O_3$ 93/7
Körnung: 10-100 m
Partikelform: unregelmäßig

Im Plasma wird das Pulver bei Temperaturen $> 10^5$ K geschmolzen und auf Geschwindigkeiten von > Mach 1 beschleunigt.

Wie insbesondere Fig. 2 zeigt, hat sich bei diesem Aufspritzen die Struktur des Trägers bei der Schicht schattenartig abgebildet, d.h., es sind feine schmale im Querschnitt spitzkegelförmige Stege 7 aus der Schicht 6 über den Rippen 5 hervorragend entstanden, welche etwa bei RH die gleiche Dicke D aufweisen wie über der Gehäusewand (in Fig. 2 die Höhe). Die Dicke L der Schicht 6 liegt mit Vorteil etwa zwischen 1 und 15 mm, bevorzugt zwischen etwa 1 bis 2 mm (D ≈ S 4 -⅓ S).

Mit der erfindungsgemäß aufgebrachten und zusammengesetzten Schicht einheitlichen keramischen Materials hoher Beständigkeit wurden einige tausend Zyklen bei Heißgastemperaturen über 1000°C insbesondere über 1300°C erreicht ohne daß nennenswerter Schichtverlust nachzuweisen war. Der Spalt kann klein und im wesentlichen konstant gehalten werden. Das Einlaufen erfolgt zugleich mit der bekannten Kühlung der Gehäuseinnenwand durch Anblasen mit Luft, die z. B. dem Verdichterende des Gasgenerators entnommen werden kann. Damit ergaben sich wesentlich verbesserte Gesamtwirkungsgrade.

Der Erfindungsgegenstand wird vorzugsweise bei Luftstrahltriebwerken verwendet, ist jedoch auch bei anderen Strömungsmaschinen anwendbar, bei denen durch Heißgas beaufschlagte Axialturbinen vorgesehen sind.

Der Erfindungsgegenstand ist auch mit anderen keramischen Spritzschichten ausführbar, solange diese ausreichend die erfindungsgemäße Oberflächenstruktur auszubilden geeignet und zwar ausreichend fragil, jedoch korrosions- und erosionsfest sind. Zwischen dem metallischen Gehäuse, dem Träger und/oder der keramischen Schicht kann mit Vorteil eine Zwischenschicht, insbesondere eine oder mehrere Haftschichten angeordnet werden. Die keramische Schicht kann vorteilhafterweise auch mit Teilchen oder Fasern anderer Werkstoffe wie Metall, Glas, Metall-Keramik, Glas-Keramik zusammen aufgebracht und/oder verbunden und/oder in an sich bekannter Weise verstärkt werden. Eine Vergrößerung oder Verkleinerung der Dicke der Schicht kann je nach Anwendungsfall erfolgen, ohne hierdurch den Rahmen der Erfindung zu verlassen.

**Patentansprüche**

1. Gehäuse einer Strömungsmaschine, insbesondere Gasturbine mit Matrixverbindungsmitteln, um eine Überzugsschicht aus Keramik-Material mit einem zu ummantelnden metallischen Substrat zu verbinden, gekennzeichnet durch die Kombination folgender Merkmale:
   a) auf der radial inneren Oberfläche der den Rotor umgebenden Gehäusewand ist ein metallischer Körper mit Rippenstruktur unlösbar befestigt,
   b) auf dem metallischen Körper und der Oberfläche der Gehäusewand ist eine abreibbare, korrosions- und erosionsfeste Keramikschicht aufgebracht, die aus einem stabilisierten Zirkonoxid besteht,
   c) als Pulverspritzschicht mit unregelmäßig geformten feinkörnigen Partikeln,
   d) die die Waben des metallischen Körpers vollständig ausfüllt und daran anhaftet,
   e) und auf den Stirnkanten der Rippen über die Schichtoberfläche hervorragende schmale erhabene Stege aus dem Material der Schicht gebildet sind,
   f) die den Laufschaufelspitzen direkt gegenüberliegen. .

2. Gehäuse nach Anspruch 1, dadurch gekennzeichnet, daß die, die Stege überragende Struktur im wesentlichen rechteckige Querschnitte aufweisen.

3. Gehäuse nach Anspruch 1 oder 2, dadurch gekennzeichnet, daß die rippenartige Struktur Honigwabenform aufweist.

4. Gehäuse nach Anspruch 1 bis 3, dadurch gekennzeichnet, daß die Stege über den Rippen der Honigwabenform etwa 1 bis 5 mm überstehen.

5. Gehäuse nach einem der vorhergehenden Ansprüche dadurch gekennzeichnet, daß die Schicht eine die Waben des metallischen Trägerkörpers überdeckende Dicke (Höhe) aufweist.

6. Gehäuse nach einem der vorhergehenden Ansprüche dadurch gekennzeichnet, daß die Schicht etwa 1 bis 15 mm dick ist.

7. Gehäuse nach einem der vorhergehenden Ansprüche dadurch gekennzeichnet, daß die Schicht durch Plasmaspritzen aufgebracht ist.

8. Gehäuse nach einem der vorhergehenden Ansprüche, dadurch gekennzeichnet, daß die Stege des metallischen Trägerkörpers etwa halb so dick (hoch) sind, wie die Abstände zweier paralleler Stege.

9. Gehäuse nach einem der vorhergehenden Ansprüche, dadurch gekennzeichnet, daß die Schicht metallische oder glasige Teilchen oder Fasern enthält.

10. Gehäuse nach einem der vorhergehenden Ansprüche, dadurch gekennzeichnet, daß die Rippen auf dem Träger zwischen zwei parallelen Rippen einen etwa gleichen Abstand (S) aufweisen und die Höhe der Rippen (D) zwischen ≈ 1/4 und 1 mal diesem Abstand entspricht.

**Claims**

1. A housing for a turbo-engine, particularly a gas turbine with matrix connecting means in order to connect a coating of ceramic material with a metal substrate to be covered, characterised by the combination of the following characteristics:
a) a metal body of ribbed structure is undetachably fixed on the radially inner surface of the housing wall surrounding the rotor;
b) on the metal body and the surface of the housing wall an abradable corrosion and erosion resistant ceramic layer is applied which consists in a stabilised zirconium oxide;
c) in the form of a pulverised sprayed layer with irregularly formed fine-core particles;
d) which fills out completely, and adheres to, the honeycomb of the metal body;
e) narrow raised webs in the material of the layer being formed on the front edges of the ribs protruding over the surface of the layer;
f) which webs lie directly opposite the rotor blade tips.

2. A housing according to Claim 1, characterised in that the structure of the protruding webs exhibits substantially rectangular cross-sections.

3. A housing according to Claim 1 or 2, characterised in that the rib-like structure is in the form of a honeycomb.

4. A housing according to Claims 1 to 3, characterised in that the webs protrude above the ribs of the honeycomb by some 1 to 5 mm.

5. A housing according to one of the foregoing claims, characterised in that the layer has a thickness (height) covering the honeycomb of the metallic supporting body.

6. A housing according to one of the foregoing claims, characterised in that the layer is about 1 to 15 mm thick.

7. A housing according to one of the foregoing claims, characterised in that the layer is applied by plasma spraying.

8. A housing according to one of the foregoing claims, characterised in that the webs of the metallic supporting body have approximately half the thickness (height) of the distances between two parallel webs.

9. A housing according to one of the foregoing claims, characterised in that the layer contains metallic or glass-like particles or fibres.

10. 4 housing according to one of the foregoing claims, characterised in that the ribs on the support between two parallel ribs are separated by substantially the same distance (S) and the height of the ribs (D) corresponds to between approximately 1/4 and 1 time said distance.

**Revendications**

1. Carter d'une turbomachine, en particulier d'une turbine à gaz, avec des moyens de fixation matriciels, afin de relier une couche de revêtement en céramique avec un substrat métallique d'enrobage, caractérisé par la combinaison des caractéristiques suivantes:
a) Sur la face interne radiale de la paroi de carter entourant le rotor est fixée de manière inamovible une structure métallique présentant des nervures.
b) Une couche de céramique, susceptible d'étre polie, résistante à la corrosion et à l'érosion, composée d'un oxyde de zirconium stabilisé, est déposée sur la structure métallique et la surface de paroi de carter.
c) Cette couche est déposée par projection d'une poudre comportant des particules sous la forme de grains fins de forme irrégulière.
d) Cette couche remplit complètement les alvéoles de la structure métallique sur laquelle elle adhère,
e) d'étroites ailettes en saillie, constituées du matériau de la couche, sont formées sur les arêtes frontales des nervures en faisant saillie sur la surface de la couche,
f) Ces ailettes sont placées directement en face des pointes des aubes mobiles.

2. Carter selon la revendication 1, caractérisé en ce que les ailettes, dépassant de la structure, présentent des sections essentiellement rectangulaires.

3. Carter selon la revendication 1 ou 2, caractérisé en ce que la structure nervurée est en forme de nid d'abeille.

4. Carter selon l'une quelconque des revendications 1 à 3, caractérisé en ce que les ailettes font saillie de 1 à 5 mm au dessus des nervures du nid d'abeille.

5. Carter selon l'une des revendications précédentes, caractérisé en ce que la couche a une épaisseur (Hauteur) recouvrant les alvéoles de la structure porteuse métallique.

6. Carter selon l'une des revendications précédentes, caractérisé en ce que la couche a une épaisseur d'environ 1 à 15 mm.

7. Carter selon l'une des revendications precedentes, caractérisé en ce que la couche est déposée par projection au plasma.

8. Carter selon l'une des revendications précédentes, caractérisé en ce que les ailettes de la structure porteuse metallique ont une epaisseur (Hauteur) qui est à peu près la moitié des intervalles entre deux ailettes parallèles.

9. Carter selon l'une des revendications précédentes, caractérisé en ce que la couche contient des particules ou des fibres métalliques ou vitreuses.

10. Carter selon l'une des revendications précédentes, caractérisé en ce que les intervalles (S) entre deux nervures parallèles sur la structure porteuse sont à peu près identiques, tandis que la hauteur (D) des nervures est comprise entre à peu près 1/4 de cet intervalle et une fois la valeur de cet intervalle.

FIG. 1

FIG. 2